# EUROPEAN PATENT APPLICATION

(11) **EP 1 719 416 A2**
(43) Date of publication of application: **08.11.2006**
(21) Application number: 06113398.9
(22) Date of filing: 02.05.2006
(51) Int. Cl.: A23L 1/01, A21B 3/04

(54) **Method for holding cooked food in a steam oven**

(30) Priority: 03.05.2005 US 120405
(71) Applicant: WHIRLPOOL CORPORATION, Benton Harbor Michigan 49022 (US)
(72) Inventor: Fraccon, Stefania, 21025, Comerio (IT); Distaso, Tamara, 21025, Comerio (IT)
(74) Representative: Guerci, Alessandro

(57) **Abstract**

A method of cooking food with steam in an automatic household comprises a cooking step comprising operating a heating system to heat the cooking cavity at a cooking temperature and a holding step comprising operating the heating system to maintain the temperature of the cooking cavity at a holding temperature and operating a steam system to maintain the relative humidity of cavity at a predetermined relative humidity.

## Description

### BACKGROUND OF THE INVENTION

### Field of the Invention

The invention relates to a method for holding cooked food in an automated household steam oven.

### Description of the Related Art

When cooking a food item, a person usually tries to schedule the completion of the cooking to coincide with when the person eats or serves the food item because the food item typically is moist and at a desired temperature and doneness at the end of the cooking. However, when the person does not properly time the cooking and eating/serving events or when it is not feasible for the person to coincide the completion of the cooking with the eating/serving such that the food item is prematurely ready, the user either leaves the food item in a warmed oven, whereby the food tends to overcook and become dry, or sets the food item on a counter, whereby the food can cool to an undesirable temperature for eating. Separate warming cabinets can be used to keep food warm until it is served, assuming the person is around to remove the food. If so, the person has to inconveniently remove the food item from the oven and place it in the warming cabinet. Thus, it is desirable to have an oven that can cook food and hold the cooked food to keep the cooked food warm and moist until it is served.

### SUMMARY OF THE INVENTION

A method of cooking food with steam according to one embodiment of the invention in an automatic household oven with a cooking cavity, a heating system for heating the cooking cavity, and a steam system for introducing steam into the cooking cavity comprises a cooking step comprising operating the heating system to heat the cooking cavity at a cooking temperature and a holding step comprising operating the heating system to maintain the temperature of the cooking cavity at a holding temperature and operating the steam system to maintain the relative humidity of the cavity at a predetermined relative humidity.

The predetermined relative humidity can comprise a predetermined range of relative humidity. The predetermine range of relative humidity can be from about 40% to about 60% relative humidity. The predetermined relative humidity can be input by a user. The predetermined relative humidity can be input as a steam injection rate.

The holding temperature can be less than the cooking temperature. The holding temperature can be less than the boiling point of water. The holding temperature can be within a range of from about 63 °C (145 °F) to about 93 °C (200 °F). The holding temperature can be input by a user.

The holding step can comprise cycling a heating element of the heating system to maintain the temperature of the cooking cavity at the holding temperature. The holding step can comprise cycling a boiler of the steam system to maintain the relative humidity of the cooking cavity at the predetermined relative humidity.

The cooking step can further comprise operating the steam system to introduce steam into the cooking cavity.

The holding step can automatically begin after the cooking step. The holding step can immediately follow the cooking step. The holding step can last for a predetermined period of time. The predetermined period of time can be manually input by a user.

### BRIEF DESCRIPTION OF THE DRAWINGS

In the drawings:

Fig. 1 is a perspective view of an exemplary automatic household oven.

Fig. 2 is a schematic view of the oven of Fig. 1.

Fig. 3 is a schematic diagram illustrating a controller of the oven of the Fig. 1 and exemplary components in operative communication with the controller for executing a method of holding cooked food in a steam oven according to one embodiment of the invention.

Fig. 4 is a flow chart depicting a method of holding cooked food in a steam oven according to one embodiment of the invention.
Fig. 5 is a schematic graph illustrating a temperature and a relative humidity in a cooking cavity of the oven of Fig. 1 during the execution of a holding step of the method of holding cooked food in a steam oven shown in Fig. 4.

### DESCRIPTION OF THE PREFERRED EMBODIMENT

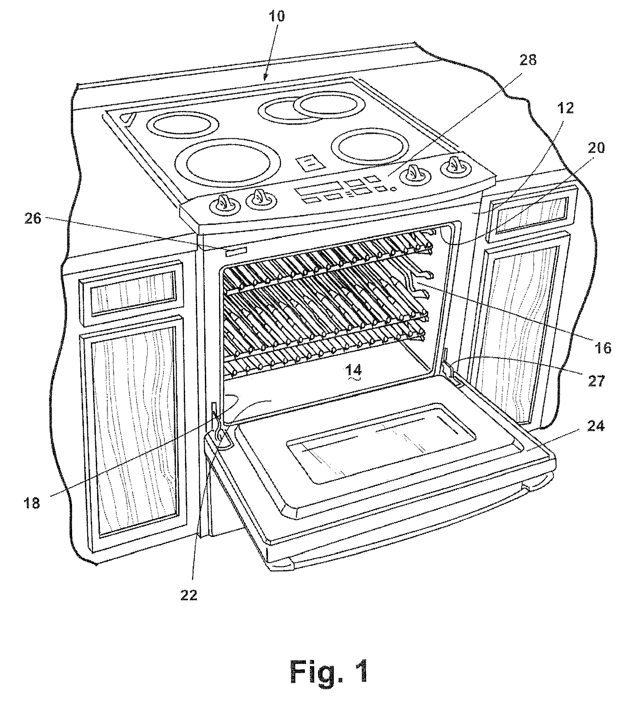

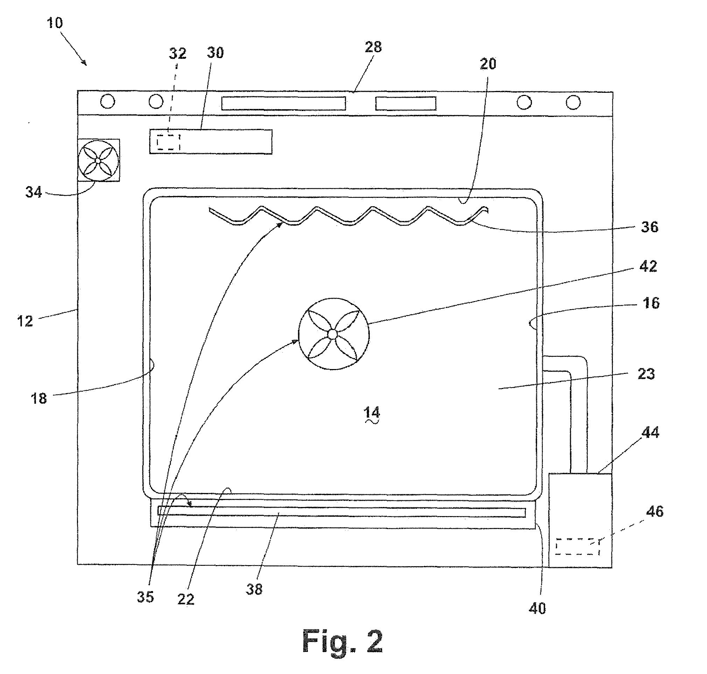

Referring now to the figures, Fig. 1 illustrates an exemplary automatic household oven 10 that can be used to implement a method for holding cooked food in a steam oven according to one embodiment of the invention. The oven 10 comprises a cabinet 12 with an open-face cooking cavity 14 defined by cooking cavity walls: a pair of spaced side walls 16, 18 joined by a top wall 20, a bottom wall 22, and a rear wall 23 (Fig. 2). A door 24 pivotable at a hinge 27 selectively closes the cavity 14, and a sensor 26 detects an open position of the door 24 and a closed position of the door 24. When the door 24 is in the open position, a user can access the cavity 14, while the door 24 in the closed position prevents access to the cavity 14 and seals the cavity 14 from the external environment.

The oven 10 further comprises a control panel 28 with a user interface accessible to the user for inputting desired cooking parameters, such as temperature and time, of manual cooking programs or for selecting automated cooking programs. The user interface can comprise, for example, a button, a touch pad, a touch screen, or a voice command unit. The control panel 28 communicates with a controller 30 located in the cabinet 12, as shown in Fig. 2. The controller 30 can be a proportional-integral-derivative (PID) controller or any other suitable controller, as is well-known in the automatic oven art. The controller 30 stores data, such as default cooking parameters, the manually input cooking parameters, and the automated cooking programs, receives input from the control panel 28, and sends output to the control panel 28 for displaying a status of the oven 10 or otherwise communicating with the user. Additionally, the controller 30 includes a timer 32 for tracking time during the manual and automated cooking programs and a cooling fan 34 located in the cabinet 12 for drawing cooling air into the cabinet 12 and directing the air toward the controller 30 to avoid overheating of the controller 30 by heat conducted from the cavity 14. The cooling air flows around the outside of the cooking cavity walls 16, 18, 20, 22, 23.

With continued reference to Fig. 2, the oven 10 further comprises a heating system 35 having an upper heating element 36, commonly referred to as a broiler, and a lower heating element 38. The schematic illustration of the Fig. 2 shows the lower heating element 38 as being hidden or mounted beneath the cooking cavity bottom wall 22 in a heating element housing 40. Heat from the lower heating element 38 conducts through the bottom wall 22 and into the cavity 14. Alternatively, the lower heating element 38 can be mounted inside the cavity 14, as is well-known in the oven art. Further, the upper and lower heating elements 36, 38 can be mounted at the side walls 16, 18 of the cavity 14, as disclosed in U.S. Patent No. 6,545,251 to Allera et al. During use, the upper heating element 36 creates upper heat, or heat emanating from the upper heating element 36 to an upper portion of the cavity 14, and the lower heating element 38 creates bottom heat, or heat emanating from the lower heating element 38 to a lower portion of the cavity 14.
The heating system 35 according to the illustrated embodiment further comprises a convection fan 42 that circulates air and steam, when present, within the cavity 14. The convection fan 42 can be any suitable fan and can be mounted in any suitable location of the cavity 14, such as in the rear wall 23.

In addition to the heating system, the oven 10 comprises a steam system 44 preferably mounted within the cabinet 12 and configured to introduce steam into the cavity 14. The steam system 44 in the illustrated embodiment comprises a boiler 46 that heats water stored in the steam system 44. However, the steam system 44 can be any suitable system that is capable of introducing steam directly into the cavity 14 or introducing water that is turned into steam in the cavity 14 and is not limited to the system shown schematically in Fig. 2.

Ovens having a heating system and a steam system are commonly referred to as combi steam ovens. The heating system can be employed alone, as in a traditional oven, or in combination with the steam system. When both the heating system and the steam system are utilized, the steam system functions as a support or accessory for the heating system. Alternatively, the steam system can be used alone for cooking with steam only.

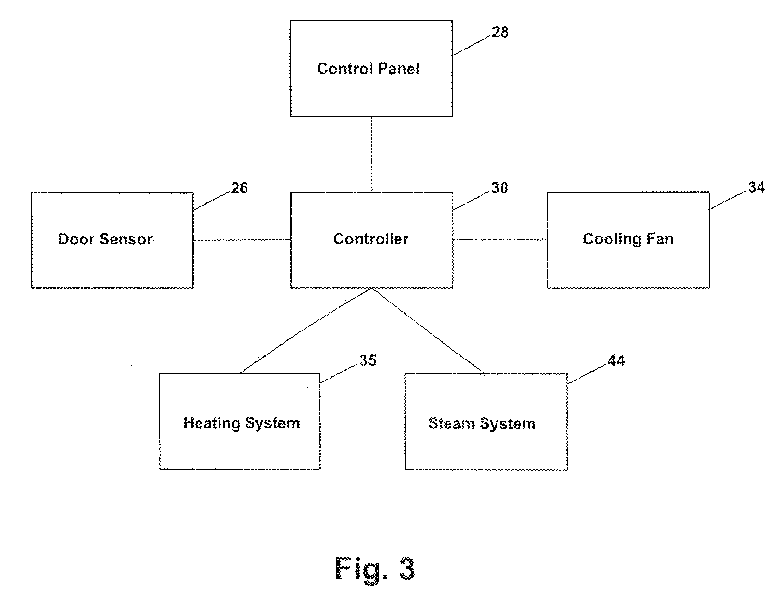

Fig. 3 is a block diagram that schematically illustrates a control system of the oven 10. The control system comprises the controller 30, which operably communicates with the control panel 28, as described above, the door sensor 26, the cooling fan 34, the heating system 35, and the steam system 44. The door sensor 26 communicates to the controller 30 the open or closed position of the door 24, and the controller 30 communicates with the cooling fan 34 to activate or deactivate the cooling fan 34 to control the temperature of the controller 30. The controller 30 instructs the heating system 35 to activate or deactivate the upper heating element 36, the lower heating element 38, and the convection fan 42, either all together, individually, or in groups, and provides instructions regarding the desired temperature of the cavity 14 and the rate at which the heating system 35 heats the cavity 14. Similarly, the controller 30 instructs the steam system 44 to activate or deactivate the boiler 46 and provides instructions regarding the desired temperature of the water in the steam system 44 in order to achieve the desired relative humidity in the cavity 14.

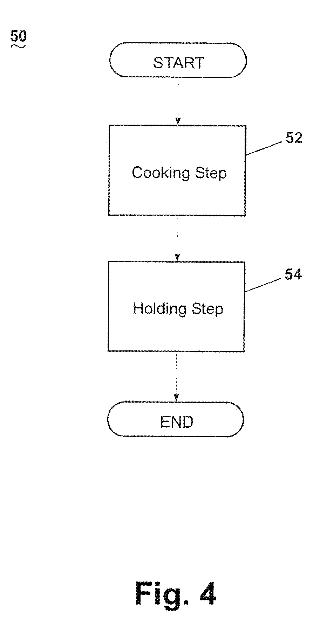

As stated above, the exemplary oven 10 can be used to implement a method 50 of holding cooked food in a steam oven according to one embodiment of the invention. As shown in Fig. 4, the method 50 comprises a holding step 54 preceded by a cooking step 52. The cooking step 52 can comprise any suitable cooking cycle, either manual or automatic, for cooking a food item. During the cooking step 52, the heating system 35 operates to control a temperature of the cavity 14, and the steam system 44 operates to control a relative humidity of the cavity 14. The heating system 35 heats the cavity 14 to a cooking temperature, which can be a single set temperature or can vary during the cooking step 52. For example, a common cooking step comprises heating the cavity 14 to a temperature set by the user through the control panel 28 and maintaining the temperature for the rest of the cooking step. Another exemplary cooking step comprises heating the cavity 14 according to an automatic cooking cycle, which can include varying the temperature during the cooking step. The steam system 44 can introduce steam into the cavity 14 according to a user input relative humidity or according to an automatic cooking cycle, which can include varying the relative humidity during the cooking step 52. However, it is within the scope of the invention cook without steam during the cooking step 52. Exemplary cooking steps are disclosed in the following, which are incorporated herein by reference in their entirety: application No. US20040240, entitled "Method for Baking Bread Using Steam" and filed April 20, 2005; application No. US20040239, entitled "Method for Baking A Dessert Using Steam" and filed April 20, 2005; application No. US20050064, entitled "Method for Cooking Meat Using Steam" and filed May 3, 2005; and application No. US20050072 entitled "Method of Steam Cooking" and filed May 3, 2005. While some of these methods are described with respect to particular types of food, the method 50 of holding cooked food in a steam oven according to the invention is not limited to use with any particular food and can be used with any suitable food.

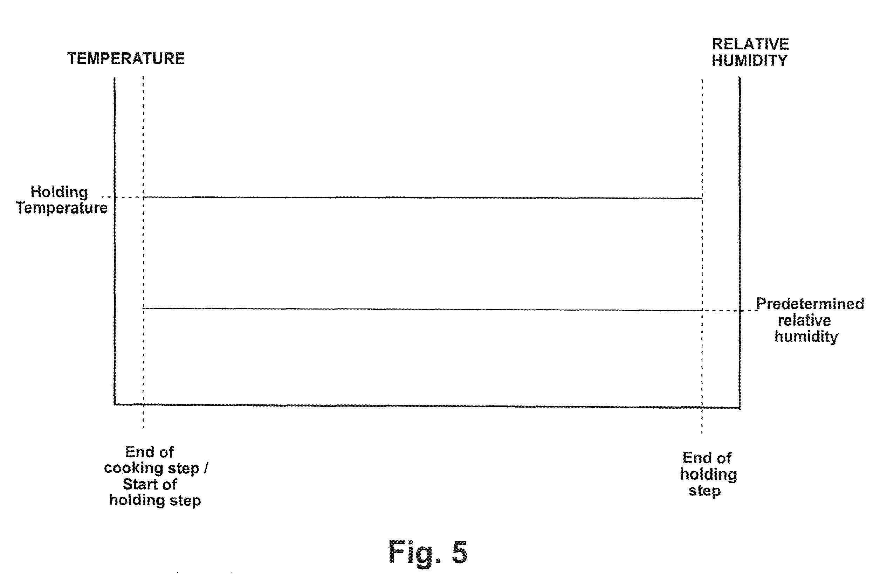

The holding step 54 follows the cooking step 52 to keep the cooked food warm and moist until the user is ready to eat and/or serve the cooked food. The holding step 54 can begin automatically when then cooking step 52 ends, or the holding step 54 can be initiated manually by the user through the control panel 28. During the holding step 54, the heating system 35 maintains the temperature of the cavity 14 at a holding temperature, and the steam system 44 maintains the relative humidity of the cavity 14 at a predetermined relative humidity, as shown schematically in Fig. 5. Fig. 5 is not intended to report actual behavior of the temperature and the relative humidity during the holding step 54; rather, Fig. 5 represents a general behavior of these properties. It will be apparent to one of ordinary skill in the oven art that, in reality, the actual temperature and the actual relative humidity fluctuate about a target temperature, whether holding a temperature or increasing the temperature, and a target relative humidity during the operation of an oven.

The holding temperature can be a single set temperature, as indicated in the schematic of Fig. 5, or can be a range of temperatures. For example, the holding temperature can range between a minimum holding temperature and a maximum holding temperature during the holding step 54. The holding temperature is selected so as to maintain the cooked food in a warm condition without causing the cooked food to overcook. The holding temperature can be less than the cooking temperature; however, if the cooking step 52 is a slow cooking cycle, where the cooking temperature is low, the holding temperature can be greater than the cooking temperature. According to one embodiment of the invention, the holding temperature is less than the boiling point of water, which is 100 °C (212 °F) at sea level. Exemplary holding temperatures are temperatures between about 63 °C (145 °F) and 93 °C (200 °F). Furthermore, the holding temperature can be automatically set by the controller 30 or can be manually input by the user through the control panel 28.

The heating system 35 of the illustrative oven 10 maintains the cavity 14 at the holding temperature by cycling at least one of the upper and lower heating elements 36, 38 according to a duty cycle. An exemplary duty cycle is the percentage of time the heating element 36, 38 is on (i.e., power is supplied to the heating element 36, 38) during a certain time interval, such as 1 minute.

Similarly, the predetermined relative humidity can be a single set relative humidity, as indicated in the schematic of Fig. 5, or can be a range of relative humidities. For example, the predetermined relative humidity can range between a minimum relative humidity and a maximum relative humidity during the holding step 54. The predetermined relative humidity is selected so as to maintain the cooked food in a moist condition without causing the cooked food to become soggy. According to one embodiment of the invention, the predetermined relative humidity is less than the maximum relative humidity of the cavity 14. Relative humidity is the ratio of the amount of water vapor in the air at a specific temperature to the maximum amount that the air could hold at that specific temperature, and maximum relative humidity decreases with increasing temperature above 100 °C (212 °F) for a given pressure. Below 100 °C (212 °F), the maximum relative humidity at atmospheric pressure is 100%. Exemplary predetermined relative humidities are relative humidities between about 40% and 60%. Furthermore, the predetermined relative humidity can be automatically set by the controller 30 or can be manually input by the user through the control panel 28. In the latter case, the user can input the desired relative humidity directly or a steam injection rate, which controls the relative humidity. When the user inputs the desired relative humidity directly, the controller 30 can relate the desired relative humidity to a corresponding steam injection rate for controlling the steam system 44, or the oven 10 can comprise a humidity sensor to detect the relative humidity of the cavity 14 so that the controller 30 can control the steam system 44 to maintain the desired relative humidity.

The steam system 44 of the illustrative oven 10 maintains the cavity 14 at the predetermined relative humidity and corresponding steam injection rate by cycling the boiler 46 according to a duty cycle. An exemplary duty cycle is the percentage of time the boiler 46 is on (i.e., power is supplied to the boiler 46) during a certain time interval, such as 1 minute. To achieve a relative humidity less than the maximum relative humidity of the cavity 14, the duty cycle of the boiler 46 is less than 100%, depending on the type of oven utilized.

The exemplary values for the holding temperature and the predetermined relative humidity given above are dependent on the oven 10 utilized to implement the method 50. Different ovens have different types of heating systems (e.g., some ovens do not have the convection fan 42) and steam systems, which affect the implementation of the method 50.

The holding step 54 can have any suitable duration ranging from minutes to hours. The duration of the holding step 54 can be manually input by a user through the control panel 28 or can be automatically set by the controller 30. The holding step 54 can end after a predetermined period of time, or the user can manually end the holding step 54 when the user is ready to eat/serve the cooked food.

When the user desires to cook food using the inventive method 50, the user prepares the food, places the food along with a food support, if used, in the cavity 14, and closes the door 24. If desired, the cavity 14 can be preheated and/or prehumidified prior to placing the food in the cavity 14. The user selects a manual or automatic cooking cycle on the oven 10 through the control panel 28 and enters operational parameters, if needed. Depending on the oven 10 and the manner in which the holding step is initiated, the user can also enter whether a holding step 54 is desired, the holding temperature, and the predetermined relative humidity or steam injection rate. The oven 10 can be configured so that the holding step 54 with a preprogrammed holding temperature and a preprogrammed relative humidity or steam injection rate automatically begins after the cooking step 52. The oven 10 then implements the method 50, beginning at the cooking step 52. Following the cooking step 52, the holding step 54 begins, either automatically according the user inputs described above or manually by the user through the control panel 28. The holding step 54 continues for the predetermined period of time or until the user ends the holding step 54. Thereafter, the user removes the cooked food, which is moist and warm, from the cavity 14 and eats/serves the cooked food. As a result of the method 50, the cooked food is maintained in a desirable serving condition due to the controlled holding temperature and the controlled predetermined relative humidity, and the user does not have to inconveniently move the cooked food from one apparatus to another to keep it warm and moist before serving.

While the invention has been specifically described in connection with certain specific embodiments thereof, it is to be understood that this is by way of illustration and not of limitation, and the scope of the appended claims should be construed as broadly as the prior art will permit.

## Claims

1. A method of cooking food with steam in an automatic household oven with a cooking cavity (14), a heating system (35) for heating the cooking cavity, and a steam system (44) for introducing steam into the cooking cavity, the method comprising:
a cooking step comprising operating the heating system to heat the cooking cavity (14) at a cooking temperature; and
a holding step comprising operating the heating system (35) to maintain the temperature of the cooking cavity at a holding temperature and operating the steam system (44) to maintain the relative humidity of the cavity at a predetermined relative humidity.

2. The method according to claim 1, wherein the predetermined relative humidity comprises a predetermined range of relative humidity.

3. The method according to claim 2, wherein the holding temperature is less than the cooking temperature.

4. The method according to claim 3, wherein the holding temperature is within a range of from about (63) °C (145 °F) to about 93 °C (200 °F).

5. The method according to claim 2, wherein the predetermine range of relative humidity is from about 40% to about 60% relative humidity.

6. The method according to claim 4, wherein the holding step comprises cycling a heating element (3 6, 3 8, 40) of the heating system (35) to maintain the temperature of the cooking cavity at the holding temperature.

7. The method according to claim 6, wherein the holding step comprises cycling a boiler (46) of the steam system (44) to maintain the relative humidity of the cooking cavity at the predetermined relative humidity.

8. The method according to claim 7, wherein the cooking step further comprises operating the steam system to introduce steam into the cooking cavity (14).

9. The method according to claim 1, wherein the holding step comprises cycling a boiler (46) of the steam system (44) to maintain the relative humidity of the cooking cavity at the predetermined relative humidity.

10. The method according to claim 1, wherein the holding step automatically begins after the cooking step.
